# EUROPÄISCHE PATENTSCHRIFT

(11) **EP 1 930 072 B1**
(45) Veröffentlichungstag und Bekanntmachung des Hinweises auf die Patenterteilung: **10.05.2017**
(21) Anmeldenummer: 07122059.4
(22) Anmeldetag: 03.12.2007
(51) Int. Cl.: B01J 13/06, B01J 13/20

(54) **Formaldehydreduzierte Dispersionen von Mikrokapseln aus Melamin-Formaldehyd-Harzen**
Formaldehyde-reduced dispersion of microcapsules made from melamine-formaldehyde resin
Dispersions réduites en formaldéhyde de microcapsules en résines de mélamine-formaldéhyde

(30) Priorität: 15.12.2006 EP 06126221; 06.12.2006 EP 06125508
(43) Veröffentlichungstag der Anmeldung: 11.06.2008
(73) Patentinhaber: BASF SE, 67056 Ludwigshafen am Rhein (DE)
(72) Erfinder: Nervo, Jacques, 67061 Ludwigshafen (DE); Eisermann, Herbert, 68229 Mannheim (DE)
(74) Vertreter: BASF IP Association

(56) Entgegenhaltungen:
- WO-A1-2006/018130
- DE-A1-102005 002 411
- GB-A- 2 094 257
- US-A- 4 336 170
- DATABASE WPI Week 198012 Thomson Scientific, London, GB; AN 1980-21034C XP002593887, -& JP 55 018218 A (NIPPON N C R KK) 8. Februar 1980 (1980-02-08)

## Beschreibung

Die Offenbarung betrifft die Verwendung von Calciumsalzen zur Verringerung der Formaldehydemission von Mikrokapseldispersionen auf Basis von Melamin-Formaldehyd-Harzen. Die Erfindung betrifft außerdem ein Verfahren zur Herstellung einer Dispersion von Mikrokapseln durch Kondensation von teilmethyliertem Melamin-Formaldehyd-Harz in Wasser, in dem das im Wesentlichen wasserunlösliche, den Kapselkern bildende Material dispergiert ist, in Gegenwart eines anionischen Schutzkolloids sowie die nach diesem Verfahren erhaltenen Dispersionen von Mikrokapseln und deren Verwendung zur Herstellung von Druckfarben und Papierbeschichtungsmassen.

Mikrodisperse Teilchen, die Durchmesser im Bereich von etwa 0,1 bis 100 µm aufweisen können, haben breite Anwendung in verschiedenen Bereichen gefunden. Beispielsweise werden sie als Vollkugeln in Polier- und/oder Reinigungsmitteln, als Abstandshalter in Druckfarben, als Maßgröße für medizinisch-mikroskopische Untersuchungen usw. verwendet. Neben den Vollkugeln sind Mikrokapseln bekannt, die als Kernmaterial flüssige, feste oder gasförmige, in Wasser unlösliche oder im wesentlichen unlösliche Stoffe enthalten können. Als Material für die Kapselwände sind beispielsweise Melamin-Formaldehyd-Polymere, Polyurethan, Gelatine, Polyamide oder Polyharnstoffe gebräuchlich. Weit verbreitet ist die Verwendung ölgefüllter Mikrokapseln zur Herstellung selbstdurchschreibender Papiere.

Die ölgefüllten Mikrokapseln werden dazu in Papierbeschichtungsmassen eingearbeitet, mit denen Papiersubstrate beschichtet werden. Die gegenwärtig üblichen hohen Beschichtungsgeschwindigkeiten erfordern eine niedrige Viskosität der Papierbeschichtungsmassen, was wiederum eine geringe Viskosität der Mikrokapseldispersionen erfordert. Dennoch sollte die Kapselkonzentration der Dispersionen möglichst hoch sein, um ein unnötig nasses Arbeiten zu vermeiden. Zur Erzielung einer guten Farbstärkeausbeute wird ferner eine möglichst enge Kapselgrößenverteilung angestrebt.

Dispersionen von Mikrokapseln aus Aminoplastharzen, wie Melamin-Formaldehyd-Harzen, enthalten herstellungsbedingt mehr oder weniger freien Formaldehyd. Es ist aus umwelt- und arbeitshygienischen Gründen anzustreben, den Formaldehydgehalt so niedrig wie möglich zu halten, ohne jedoch andere Eigenschaften der Mikrokapseldispersionen ungünstig zu beeinflussen. Dabei ist zwischen dem Formaldehyd-Gehalt der Dispersion selbst und dem Formaldehyd-Gehalt des mit der Dispersion beschichteten Materials zu unterscheiden. Eine geringe Konzentration an freiem Formaldehyd in der wässrigen Kapseldispersion bedeutet nicht notwendigerweise, dass auch eine Bestimmung des Formaldehyd-Gehalts in dem beschichteten Material, z. B. mittels des sogenannten Kaltwasserauszugs nach DIN EN 645 und DIN EN 1541, niedrige Formaldehydwerte ergibt.

Zur Verringerung des Formaldehyd-Gehalts ist es üblich, Mikrokapseldispersionen auf der Basis von Melamin-Formaldehyd-Harzen Formaldehydfänger zuzusetzen. Zu den am häufigsten verwendeten Formaldehydfängern gehören Ammoniak, Harnstoff, Ethylenharnstoff und Melamin, die den Restgehalt an Formaldehyd in der Kapseldispersion mehr oder minder wirksam reduzieren.

Aus EP-A 0 383 358 und DE-A 38 14 250 sind lichtempfindliche Materialien bekannt, die aus Mikrokapseln bestehen, deren Wände aus Melamin-Formaldehyd-Harzen gebildet werden. Zur Entfernung überschüssigen Formaldehyds wird bei der Härtung Harnstoff zugesetzt.

Bei den in der EP-A 319 337 und US 4,918,317 beschriebenen Verfahren wird Harnstoff gegen Ende der Härtung zugesetzt.

Die EP-A 0 415 273 beschreibt die Herstellung und Verwendung mono- und polydisperser Vollkugelteilchen aus Melamin-Formaldehyd-Kondensat. Zur Bindung des bei der Kondensation freiwerdenden Formaldehyds wird die Verwendung von Ammoniak, Harnstoff oder Ethylenharnstoff vorgeschlagen.

Mikrokapseln aus Melamin-Formaldehyd-Harzen, die sich durch ihre gleichmäßige Kapselgröße und Dichtigkeit auszeichnen, sind aus der EP-A 0 218 887 und der EP-A 0 026 914 bekannt. Diese Kapseldispersionen enthalten jedoch noch restlichen freien Formaldehyd, dessen Anwesenheit bei der Weiterverarbeitung unerwünscht ist.

Die EP-A 0 026 914 empfiehlt daher, den Formaldehyd im Anschluss an die Härtung mit Ethylenharnstoff und/oder Melamin als Formaldehydfänger zu binden.

Aus der DE 198 35 114 sind Dispersionen von Mikrokapseln auf der Basis von Melamin-Formaldehyd-Harz bekannt, wobei das Melamin-Formaldehyd-Harz teilweise verethert ist und ein wasserlösliches primäres, sekundäres oder tertiäres Amin oder Ammoniak enthält. Vor der Härtung wird als Formaldehydfänger Harnstoff zugesetzt.

Die DE 198 33 347 beschreibt ein Verfahren zur Herstellung von Mikrokapseln durch Kondensation von Melamin-Formaldehyd-Harzen und/oder deren Methylethern, wobei vor der Härtung Harnstoff oder Harnstoff, dessen Aminogruppen mit einer Ethylen- oder Propylenbrücke verbunden sind, als Formaldehydfänger zugesetzt wird. Die erhaltenen Dispersionen sind zwar formaldehydarm, durch den Zusatz von Harnstoff vor der Härtung werden jedoch die Stabilität der Mikrokapseln und die Viskosität der Mikrokapseldispersion ungünstig beeinflusst.

Die WO 01/51197 lehrt ein Verfahren zur Herstellung von Mikrokapseln durch Kondensation von Melamin-Formaldehyd-Harzen, bei dem während der Härtung ein Gemisch aus Melamin und Harnstoff zugesetzt wird.

Durch den Zusatz der genannten Formaldehydfänger zur fertigen Mikrokapseldispersion bzw. bei der Herstellung der Mikrokapseldispersion wird regelmäßig der Formaldehydgehalt der Dispersion gesenkt. Der Formaldehydgehalt von Papieren, die mit die Mikrokapseldispersionen enthaltenden Beschichtungsmassen beschichtet sind, der durch den Kaltwasserauszug ermittelbar ist, lässt sich allerdings auch bei Zugabe grosser Mengen an Formaldehydfänger nicht unterhalb eine bestimmte Grenze senken.GB 2 094 257 A offenbart ein Verfahren zur Herstellung von Mikrokapseldispersionen durch die Kondensation von Melamin-Formaldehyd in Wasser, in dem die Substanz die eingekapselt werden muss, dispergiert ist, in Gegenwart eines anionischen Tensids, durch Polykondensation und Vernetzung, wobei man Calciumhydroxid zusetzt. Der pH in Gegenwart des anionischen Tensids ist 2,6 bis 6,0. Aufgabe der vorliegenden Erfindung ist es, ein Verfahren zur Herstellung einer formaldehydreduzierten Dispersion von Mikrokapseln bereitzustellen, wobei der mittels Kaltwasserauszug feststellbare Formaldehyd-Gehalt von mit der Dispersion beschichteten Papieren möglichst gering ist. Eine weitere Aufgabe besteht in der Bereitstellung niedrigviskoser Mikrokapseldispersionen, insbesondere niedrigviskoser Mikrokapseldispersionen mit hohem Feststoffgehalt.

Diese Aufgaben werden gelöst durch die Verwendung von wenigstens einem Calciumsalz zur Verringerung der Formaldehydemission von Mikrokapseldispersionen auf Basis von Melamin-Formaldehyd-Harzen. Die Erfindung betrifft außerdem ein Verfahren zur Herstellung einer Dispersion von Mikrokapseln durch Kondensation von teilmethyliertem Melamin-Formaldehyd-Harz in Wasser, in dem das im Wesentlichen wasserunlösliche, den Kapselkern bildende Material dispergiert ist, in Gegenwart eines anionischen Schutzkolloids, sowie die nach diesem Verfahren erhaltenen Dispersionen von Mikrokapseln und deren Verwendung zur Herstellung von Druckfarben und Papierbeschichtungsmassen.

Unter Calciumsalz sind im Rahmen der vorliegenden Erfindung sowohl organische Calciumsalze z. B. Calciumacetat wie auch bevorzugt anorganische Calciumsalze wie Calciumcarbonat, Calciumchlorid, Calciumnitrat und insbesondere Calciumhydroxid zu verstehen.

Es werden bevorzugt 0,5 bis 15 Gew.-%, besonders bevorzugt 1 bis 10 Gew.-% und insbesondere 2 bis 8 Gew.-% Calciumsalz bezogen auf das Melamin-Formaldehyd-Harz eingesetzt. Größere Mengen an Calciumsalz sind möglich, führen jedoch teilweise zu schwachen Verfärbungen der Mikrokapseldispersion, was je nach Art der Anwendung unerwünscht sein kann.

Mikrokapseldispersion lassen sich prinzipiell durch die Kondensation eines gegebenenfalls teilmethylierten Melamin-Formaldehyd-Harzes in Wasser, in dem in dem das im Wesentlichen wasserunlösliche, den Kapselkern bildende Material dispergiert ist, in Gegenwart eines Schutzkolloids herstellen. Dabei findet eine Präformierung der Mikrokapseln statt, an die sich eine Härtung der Kapselwand anschließt. Die Präformierung findet bevorzugt bei kleineren pH-Werten, wie pH Werten von 3 bis 6,5, statt und die Härtung wird anschließend durch Temperaturerhöhung ausgelöst. Erfindungsgemäß wird während und/oder nach der Härtung wenigstens ein Calciumsalz zugesetzt.

Beispielhaft sei die Herstellung an einem besonders bevorzugten Verfahren erläutert: Gemäß diesem Verfahren erhält man eine Dispersion von Mikrokapseln durch Kondensation eines teilmethylierten Melamin-Formaldehyd-Harzes mit einem Molverhältnis von Melamin : Formaldehyd : Methanol von 1 : 3,0 : 2,0 bis 1 : 6,0 : 4,0 in Wasser, in dem das im Wesentlichen wasserunlösliche, den Kapselkern bildende Material dispergiert ist, in Gegenwart eines Schutzkolloids, bevorzugt eines Alkalimetallsalzes eines Homo- oder Copolymers von 2-Acrylamido-2-methylpropansulfonsäure als Schutzkolloid, bei pH Werten von 3 bis 6,5 durch Präformierung der Mikrokapseln bei einer Temperatur von 20 bis 50 °C und anschliessender Härtung der Kapselwand bei > 50 bis 100 °C, indem man während und/oder nach der Härtung wenigstens ein Calciumsalz zusetzt.

Das Verfahren gemäss der Erfindung wird im Allgemeinen so durchgeführt, dass man das einzukapselnde Kernmaterial, das teilmethylierte Melamin-Formaldehyd-Harz mit einem definierten Molverhältnis von Melamin : Formaldehyd : Methanol von 1 : 3,0 : 2,0 bis 1 : 6,0 : 4,0, bevorzugt 1 : 3,5 : 2,2 bis 1 : 4,5 : 2,8 und insbesondere etwa 1 : 3,9 : 2,4, das Schutzkolloid und Wasser zu einer Vormischung vereinigt, die Vormischung mit einer Säure, vorzugsweise Ameisensäure, auf einen pH-Wert von 3 bis 6,5 einstellt und die Vormischung zur Dispergierung des Kernmaterials scherenden Bedingungen aussetzt. Bei einer Temperatur im Bereich von 20 bis 50 °C, bevorzugt etwa 35 °C, präformieren sich die Mikrokapseln, d. h. es bildet sich um die dispergierten Tröpfchen des Kernmaterials eine Wand von weitgehend unvernetztem Melamin-Formaldehyd-Harz. Anschliessend wird die Temperatur erhöht, um die Kapselwand der Mikrokapseln durch Ausbildung von Vernetzungen zu härten. Die Aushärtung der Kapselwand kann bereits oberhalb von 50 °C beobachtet werden; bevorzugt werden jedoch 65 °C und insbesondere bevorzugt 75 °C als untere Grenze des Temperaturbereichs zum Aushärten gewählt. Da es sich um eine wässrige Dispersion handelt, soll die Härtung bei Temperaturen unterhalb von 100 °C, bevorzugt unterhalb von 95 °C und besonders bevorzugt unterhalb von 90 °C als oberer Temperaturgrenze durchgeführt werden. Je nach pH-Wert der Dispersion erfolgt die Härtung unterschiedlich rasch, wobei Dispersionen bei niedrigeren pH-Werten zwischen 3 und 5 besonders gut aushärten. Oberhalb von 50 °C ist jedoch auch im schwach sauren bis neutralen pH-Bereich die Härtung deutlich zu beobachten.

Die optimalen Temperaturen für die beiden Schritte Kapsel-Präformierung und - Härtung, können in Abhängigkeit vom jeweiligen pH Wert durch einfache Reihenversuche leicht ermittelt werden.

Das Erwärmen der Kapseldispersion auf die Härtungstemperatur kann auf verschiedene Weise erfolgen. In einer bevorzugten Ausführungsform wird heisser Wasserdampf in die Kapseldispersion injiziert. Die Temperatur des Wasserdampfs beträgt z. B. 105 bis 120 °C und der Druck 1,5 bis 3 bar. Es ist dabei zu berücksichtigen, dass durch das Kondensat der Feststoffgehalt der Dispersion etwas erniedrigt wird.

Während der Härtung und/oder nach der Härtung wird das Calciumsalz der Dispersion zugesetzt. Es hat sich dabei als vorteilhaft erwiesen, nach Erreichen der Härtungstemperatur das Calciumsalz während der Härtung portionsweise oder kontinuierlich zur Mikrokapseldispersion zu geben, wobei eine kontinuierliche Zugabe bevorzugt ist. Die zugegebene Menge an Calciumsalz beträgt 0,5 bis 15 Gew.-%, besonders bevorzugt 1 bis 10 Gew.-% und insbesondere 2 bis 8 Gew.-% bezogen auf das Melamin-Formaldehyd-Harz. Eine besonders bevorzugte Art der Zugabe besteht darin, nach Erreichen der Härtungstemperatur einen Zulauf einer Calciumsalz-Aufschlämmung oder -Lösung zur Dispersion der präformierten Mikrokapseln mit zeitlich im Wesentlichen konstantem Massenfluss zu starten. Der Massenfluss ist vorzugsweise so gewählt, dass sich die Zugabe über wenigstens 50%, insbesondere wenigstens 65 % der Härtungsdauer erstreckt. Die Härtungsdauer beträgt im Allgemeinen 0,5 bis 10 Stunden, typischerweise 1 bis 3 Stunden.

Dabei wird der pH-Wert vorzugsweise mit einer Säure, z. B. mit Ameisensäure, auf 3,8 bis 5,0, vorzugsweise etwa 4,5, eingestellt und gegebenenfalls gehalten.

Es hat sich ferner als vorteilhaft erwiesen nach Erreichen der Härtungstemperatur Melamin, d. h. Cyanursäuretriamid, portionsweise oder kontinuierlich zur Mikrokapseldispersion zu geben, wobei eine kontinuierliche Zugabe bevorzugt ist. Die zugegebene Menge an Melamin kann 5 bis 95,5 Gew.-%, vorzugsweise 7 bis 40 Gew.-%, insbesondere 12,5 bis 35 Gew.-%, bezogen auf das Melamin-Formaldehyd-Harz betragen. Die Zugabe erfolgt dabei vorzugsweise in der oben für das Calciumsalz beschriebenen Weise. Die mittlere Teilchengrösse der Melaminteilchen in der Aufschlämmung beträgt vorzugsweise 1 bis 50 µm, insbesondere etwa 1 bis 5 µm. Die mittlere Teilchengrösse kann geeigneterweise mit einem Malvern Sizer ermittelt werden.

Besonders bevorzugt wird während der Härtung der Mikrokapseldispersion eine Mischung aus Calciumsalz und Melamin portionsweise oder kontinuierlich zugeführt, vorzugsweise wie oben beschrieben. Bevorzugt werden dabei Gemisch enthaltend Calciumsalz und Melamin in einem Gewichtsverhältnis von 20 : 1 bis 1 : 20, vorzugsweise 1 : 1 bis 1 :10.

Es wurde ferner gefunden, dass die Mitverwendung von Harnstoff eine synergistische Wirkung auf die Senkung des mittels Kaltwasserauszugs feststellbaren Formaldehydgehalt hat. Das erfindungsgemäße Verfahren kann daher mit Vorteil so durchgeführt werden, dass man während der Härtung ein Gemisch von Calciumsalz, Harnstoff und Melamin, z. B. mit einem Gewichtsverhältnis von 1 : 1 : 3 bis 1 : 10 : 15, vorzugsweise 1 : 2 : 4 bis 1 : 6 : 10 zusetzt, zweckmäßigerweise in Form einer wässrigen Calciumsalz-Melamin-Aufschlämmung, die den Harnstoff gelöst enthält.

Bevorzugt wird nach der Härtung eine Art "Nachhärtung" durchgeführt, indem man die Dispersion mit einer wässrigen Base, vorzugsweise Natronlauge neutralisiert oder basisch stellt, vorzugsweise auf einen pH-Wert im Bereich von 9 - 12 vorzugsweise im Bereich von 10 bis 11,5.

Als Ausgangsstoffe für das Wandmaterial setzt man vorzugsweise teilmethylierte Melamin-Formaldehyd-Harze, d. h. partielle Methylether von Melamin-Formaldehyd-Harzen mit einem Molverhältnis von Melamin : Formaldehyd : Methanol von 1 : 3,0 : 2,0 bis 1 : 6,0 : 4,0, bevorzugt 1 : 3,5 : 2,2 bis 1 : 4,5 : 2,8, insbesondere etwa 1 : 3,9 : 2,4, ein. Die Methylether werden z. B. in analoger Weise hergestellt, wie es in der DE 198 35 114 angegeben ist, wobei als Alkohol Methanol verwendet wird und ohne Melaminderivat-Zusatz gearbeitet wird. Die Molverhältnisse von Melamin : Formaldehyd : Methanol des zur Kapselherstellung verwendeten Melamin-Formaldehyd-Harzes haben einen entscheidenden Einfluss auf die resultierende Viskosität der Kapseldispersion. Bei den angegebenen Molverhältnissen erhält man die günstigste Kombination von Feststoffgehalt und Viskosität der Mikrokapseldispersionen.

Als Kernmaterial für die Mikrokapseln kommen flüssige, feste oder gasförmige, in Wasser unlösliche bis im Wesentlichen unlösliche Stoffe in Betracht. Z. B. sind zu nennen : Flüssigkeiten, wie Alkylnaphthaline, partiell hydrierte Terphenyle, aromatische Kohlenwasserstoffe, wie Xylol, Toluol, Dodecylbenzol, aliphatische Kohlenwasserstoffe, wie Benzin und Mineralöl, Paraffine, Chlorparaffine, Wachse unterschiedlicher chemischer Konstitution, Fluorkohlenwasserstoffe, natürliche Öle, wie Erdnussöl, Sojaöl, ausserdem Klebstoffe, Aromastoffe, Parfümöle, Monomere, wie Acryl- oder Methacrylsäureester, Styrol, Wirkstoffe, wie Pflanzenschutzmittel, roter Phosphor, anorganische und organische Pigmente, z. B. Eisenoxidpigmente; außerdem Lösungen oder Suspensionen von Farbstoffen und vor allem von Farbbildnern und Pigmenten in Kohlenwasserstoffen, wie Alkylnaphthalinen, partiell hydriertem Terphenyl, Dodecylbenzol und anderen hochsiedenden Flüssigkeiten.

Geeignete Farbbildner sind in den eingangs genannten Druckschriften beschrieben.

Die Dispergierung des Kernmaterials erfolgt je nach der Grösse der herzustellenden Kapseln in bekannter Weise, wie es beispielsweise in der EP-A 0 026 914 beschrieben ist. Kleine Kapseln, insbesondere wenn die Grösse unterhalb von 50 µm liegen soll, erfordern Homogenisier- oder Dispergiermaschinen, wobei diese Geräte mit oder ohne Zwangsdurchlaufvorrichtung verwendet werden können. Es ist wesentlich, dass die Homogenisier- oder Dispergiermaschinen zu Beginn der Präformierungsphase eingesetzt werden. Während der Härtungsphase wird die Dispersion lediglich zur gleichmässigen Durchmischung unter niedrigscherenden Bedingungen durchmischt oder umgewälzt.

Als Schutzkolloid wird ein Alkalimetallsalz eines Homo- oder Copolymers von 2-Acrylamido-2-methylpropansulfonsäure verwendet, bevorzugt das Natriumsalz. Als Comonomere sind Acrylsäure, Methacrylsäure, C₁₋₃-Alkyl(meth)acrylate, Hydroxy-C₂₋₄-(meth)acrylate und/oder N-Vinylpyrrolidon geeignet. Das Copolymer enthält vorzugsweise wenigstens 40 Gew.-% 2-Acrylamido-2-methylpropansulfonsäure-Einheiten. Geeignete Homo- und Copolymere sind in der EP-A 0 562 344 beschrieben. Das Schutzkolloid hat vorzugsweise einen K-Wert nach Fikentscher von 100 bis 170 oder eine Viskosität von 200 bis 5000 mPas (gemessen in 20 gew.-%iger wässriger Lösung bei 23 °C in einem Brookfield-Gerät RVT Spindel 3, bei 50 Upm). Besonders bevorzugt sind Polymere mit einem K-Wert von 115 bis 150 bzw. solche, deren Viskosität 400 bis 4000 mPas beträgt.

Das Gewichtsverhältnis von Melamin-Formaldehyd-Harz zu Schutzkolloid beträgt vorzugsweise 3 : 1 bis 4,5 : 1, insbesondere 3,5 : 1 bis 4,0 : 1. Das Verhältnis von Harz zu Schutzkolloid und die Art des Schutzkolloids beeinflussen die Kapselgröße und die Kapselgrößenverteilung.

Die erfindungsgemäße hergestellten Mikrokapseldispersionen weisen eine wünschenswert niedrige Viskosität auf, so dass auch Mikrokapseldispersionen mit hohem Feststoffgehalt mit vorteilhaften Weiterverarbeitungseigenschaften hergestellt werden können. Die erhaltenen Mikrokapseldispersionen weisen im Allgemeinen einen Feststoffgehalt von 15 bis 60 Gew.-%, bevorzugt von wenigstens 40 Gew.-%, vorzugsweise jedoch von wenigstens 45 Gew.-%, insbesondere wenigstens 48 Gew.-%, und besonders bevorzugt 50 bis 53 Gew.-%, auf. Die Viskosität der Mikrokapseldispersionen (gemessen bei 23 °C in einem Brookfield-Gerät RVT Spindel 3, bei 50 Upm) beträgt im Allgemeinen weniger als 100 mPas, insbesondere weniger als 90 mPas.

Zur Herstellung von Mikrokapseldispersionen mit hohem Feststoffgehalt geht man zweckmäßigerweise so vor, dass man eine Vormischung aus Melamin-Formaldehyd-Harz, Schutzkolloid und dem den Kapselkern bildenden Material herstellt, die einen Feststoffgehalt von wenigstens 50 Gew.-%, vorzugsweise etwa 55 Gew.-% aufweist, bei 20 bis 50 °C die Präformierung der Mikrokapseln bewirkt und die Dispersion zur Härtung durch Injektion von heißem Wasserdampf auf die Härtungstemperatur erwärmt, wobei der Feststoffgehalt der Dispersion durch das Dampfkondensat auf den gewünschten Wert, z. B. etwa 50 Gew.-%, abgesenkt wird.

Mit dem erfindungsgemäßen Verfahren sind Dispersionen von Mikrokapseln mit vorteilhaft enger Kapselgrößenverteilung erhältlich, die z. B. durch einen Quotienten (d₉₀-d₁₀)/d₅₀ (Span) von 0,3 bis 0,8, vorzugsweise 0,3 bis 0,5, gekennzeichnet ist. Die d₁₀-d₅₀- und d₉₀-Werte geben Grenzwerte an, bezüglich derer 10%, 50 % bzw. 90 % der Kapseln einen Kapseldurchmesser aufweisen, der kleiner oder gleich dem Grenzwert ist. Die d₁₀-d₅₀-und d₉₀-Werte können geeigneterweise mit einem Malvern Sizer ermittelt werden. Überraschenderweise werden - entgegen der Erwartung des Fachmanns auch dann Mikrokapseldispersionen mit wünschenswert enger Grössenverteilung erhalten, wenn man von Vormischungen mit hohem Feststoffgehalt, z. B. mehr als 50 Gew.-%, ausgeht. Die Mikrokapseln weisen im Allgemeinen einen mittleren Durchmesser (d₅₀) im Bereich von 1 bis 50 µm, insbesondere 3 bis 8 µm auf. Derartige wässrige Mikrokapseldispersionen mit einem Kern aus einem im Wesentlichen wasserunlöslichen Material und einer Kapselwand aus einem kondensierten MelaminFormaldehydharz, wobei der d₅₀-Wert des Durchmessers der Mikrokapseln im Bereich von 3 bis 8 µm, der Quotient (d₉₀-d₁₀)/d₅₀ im Bereich von 0,3 bis 0,8 liegt, der Feststoffgehalt der Dispersion wenigstens 40 Gew.-%, bevorzugt wenigstens 45 Gew.-%, und die Brookfield-Viskosität der Dispersion bei 23 °C und 50 Upm weniger als 100 mPas beträgt enthaltend 0,5 bis 15 Gew.-% Calciumsalz bezogen auf das Melamin-Formaldehyd-Harz werden bevorzugt.

Die vorliegende Erfindung betrifft ferner generell wässrige Mikrokapseldispersionen auf Basis von Melamin-Formaldehyd-Harzen enthaltend 0,5 bis 15 Gew.-% Calciumsalz bezogen auf das Melamin-Formaldehyd-Harz.

Die nachfolgenden Beispiele sollen das erfindungsgemäße Verfahren näher erläutern. Die in den Beispielen angegebenen Teile und Prozente sind, sowie nicht anders angegeben, Gewichtsteile und Gewichtsprozente.

### Beispiele

### Verwendete Messmethoden

### 1. Feststoffgehalt

Der in den Beispielen angegebene Feststoffgehalt wird durch Trocknung (4 Std. bei 105 °C) bestimmt und setzt sich im Wesentlichen aus den Mikrokapseln und dem wasserlöslichen Polymeren zusammen. Die Kapseldurchmesser wurden subjektiv unter dem Mikroskop, objektiv mit einem Malvern Sizer bestimmt. Angegeben werden die Kapseldurchmesser in µm als d₅₀-Wert.

### 2. Viskosität

Die Viskosität der Kapseldispersionen sowie die Viskosität der 20 % igen Lösungen der wasserlöslichen Schutzkolloide wurde bei 23 °C mit einem Brookfield-Gerät RVT mit Spindel 3 bei 50 Upm gemessen. Der K-Wert wurde nach Fikentscher (Cellulosechemie 13 (1932) 58 ff), 0,5 %ig in Wasser, bestimmt.

### 3. Messungen der Formaldehydkonzentration im Papier nach DIN EN 645 und DIN EN 1541

Ein mit einer Streichfarbe, die durch gründliches Homogenisieren von 8,75 g Wasser, 8,25 g Mikrokapseldispersion, 1,30 g eines Celluloseschliffs als Abstandshalter (Arbocel^{®} BSM 55) und 1,30 g einer 50 gew.-%igen handelsüblichen Bindemitteldispersion auf Basis eines Copolymerisats aus Styrol und Butylacrylat (Acronal^{®} S 320 D) erhalten wurde, beschichtetes Papier (etwa 4,6 g/m²) wurde gemäss DIN EN 645 zerkleinert und ein Kaltwasserauszug gemacht. Der Formaldehyd im Filtrat wurde nach DIN 1541 mit Acetylaceton photometrisch bestimmt.

### Beispiel 1

Es wurden in einem zylindrisch geformten 2 I-Rührgefäss mit einem eingebauten stufenlos regelbaren Dispergator mit einer handelsüblichen Dispergierscheibe mit einem Durchmesser von 50 mm nacheinander 400 g einer 5 %igen Lösung eines Fluoran-Reaktfarbstoffgemisches (bestehend aus 5 Teilen Pergascript^{®} I-2RN, 20 Teilen Pergascript I-2GN, 8 Teilen Pergascript I-G, 67 Teilen Pegascript I-R, Fa. CIBA) in einer Mischung von Diisopropylnaphthalin und linearem Alkan (Siedepunkt 220 C) im Verhältnis 80 : 20, 69 g einer 70 % igen Lösung eines methylierten Melaminformaldehydharzes (Molverhältnis Melamin : Formaldehyd : Methanol 1 : 3,9 : 2,4), 64 g einer 20 %igen Lösung von Poly-2-acrylamido-2-methylpropansulfonsäure/Natriumsalz (K-Wert 123 ; Viskosität von 770 mPas Brookfield), 350 g Leitungswasser und 15 g 10%ige Ameisensäure gegeben und zu einer Kapseldispersion verarbeitet, indem man die Rührgeschwindigkeit auf eine Umfangsgeschwindigkeit auf etwa 20 m/s einstellte. Die Temperatur wurde bei etwa 35 °C gehalten.

Nach 60 Minuten Dispergierung war die Dispersion ölfrei; es hatte sich eine Teilchengrösse von etwa 5 µm eingestellt. Die Rührgeschwindigkeit der Dispergierscheibe wurde dann auf einen Wert reduziert, der zur gleichmässigen Umwälzung des Gefässinhalts ausreichte. Nach Einstellen der Härtetemperatur von 80 °C durch Heissdampfinjektion wurde mit dem Zulauf einer 64,2 %igen wässrigen Aufschlämmung bestehend aus Melamin/Harnstoff/Calciumhydroxid im Gewichtsverhältnis 6 : 3 : 1 begonnen und über einen Zeitraum von 90 Minuten insgesamt 39,5 g der Aufschlämmung zudosiert. Der pH-Wert wurde während dieser Zeit mit einer 25 %igen Ameisensäure (HCOOH) konstant bei 4,4 gehalten. Nach anschließender Zugabe von 24 g 25 %iger Natronlauge wies die Dispersion einen pH-Wert von 11,0 auf. Es erfolgte eine 30 minütige Nachhärtung bei 80 °C und pH 11,0. Nach dieser Härtephase von insgesamt 120 Minuten wurde die Dispersion auf Raumtemperatur abgekühlt. Der gemessene pH-Wert betrug 11,0.

Man erhielt eine gleichmäßige Kapseldispersion mit 50% Feststoffgehalt und einer Viskosität von 83 mPas. Die Analyse des freien Formaldehydgehalts im Kaltwasserauszug ergab einen Wert von 20 ppm und die des freien Formaldehydgehaltes in der Dispersion ergab einen Wert von 0,01 %.

Die Verarbeitungs- und Durchschreibeeigenschaften der Kapseldispersion des Beispiels erfüllen die modernen Anforderungen.

### Vergleichsbeispiel 1 (nicht erfindungsgemäß)

Es wurde wie im Beispiel 1 verfahren, jedoch wurde nach dem Erreichen der Härtetemperatur von 85 °C mit dem Zulauf einer 67,2 %igen wässrigen Aufschlämmung bestehend aus Melamin/Harnstoff im Gewichtsverhältnis 6,7 : 3,3 begonnen und über einen Zeitraum von 90 Minuten insgesamt 37,5 g der Aufschlämmung zudosiert. Der pH-Wert wurde während dieser Zeit mit einer 25 %igen Ameisensäure (HCOOH) konstant bei 4,3 gehalten. Es erfolgte eine 30 minütige Nachhärtung bei 85 °C und pH 4,3. Nach dieser Härtephase von insgesamt 120 Minuten wurde die Dispersion auf Raumtemperatur abgekühlt und mit Diethanolamin neutralisiert und mit Ammoniak 25 %ig auf ein pH-Wert von 9,5 eingestellt.

Die Analyse des freien Formaldehydgehalts im Kaltwasserauszug ergab einen Wert von 100 ppm und die des freien Formaldehydgehaltes in der Dispersion ergab einen Wert von 0,01 %.

### Vergleichsbeispiel 2:

Es wurde wie im Beispiel 1 verfahren, jedoch wurde nach dem Erreichen der Härtetemperatur von 80 °C mit dem Zulauf einer 67,2 %igen wässrigen Aufschlämmung bestehend aus Melamin/Harnstoff im Gewichtsverhältnis 6,7 : 3,3 begonnen und über einen Zeitraum von 90 Minuten insgesamt 37,5 g der Aufschlämmung zudosiert. Der pH-Wert wurde während dieser Zeit mit einer 25 %igen Ameisensäure (HCOOH) konstant bei 4,4 gehalten. Nun erfolgte die Zugabe von 28 g einer 25 %igen Natronlauge. Die Dispersion wies einen pH-Wert von 11,0 auf. Es erfolgte eine 30 minütige Nachhärtung bei 80 °C und pH 11,0. Nach dieser Härtephase von insgesamt 120 Minuten wurde die Dispersion auf Raumtemperatur abgekühlt. Der gemessene pH-Wert betrug 11,5.

Die Analyse des freien Formaldehydgehalts im Kaltwasserauszug ergab einen Wert von 200 ppm und die des freien Formaldehydgehaltes in der Dispersion ergab einen Wert von 0,12 %.

### Beispiel 2:

Es wurde wie im Beispiel 1 verfahren, jedoch wurde nach dem Erreichen der Härtetemperatur von 80 °C mit dem Zulauf einer 67,2 %igen wässrigen Aufschlämmung bestehend aus Melamin/Harnstoff im Gewichtsverhältnis 6,7 : 3,3 begonnen und über einen Zeitraum von 90 Minuten insgesamt 37,5 g der Aufschlämmung zudosiert. Der pH-Wert wurde während dieser Zeit mit einer 25 %igen Ameisensäure (HCOOH) konstant bei 4,4 gehalten. Nun erfolgte die Zugabe von 5 g einer 50 %igen Calciumhydroxid Aufschlämmung mit anschließender Zugabe von 24 g einer 25 %igen Natronlauge. Die Dispersion wies einen pH-Wert von 11,0 auf. Es erfolgte eine 30 minütige Nachhärtung bei 80 °C und pH 11,0. Nach dieser Härtephase von insgesamt 120 Minuten wurde die Dispersion auf Raumtemperatur abgekühlt. Der gemessene pH-Wert betrug 11,2.

Die Analyse des freien Formaldehydgehalts im Kaltwasserauszug ergab einen Wert von 20 ppm und die des freien Formaldehydgehaltes in der Dispersion ergab einen Wert von 0,01 %.

### Beispiel 3:

Es wurde wie im Beispiel 1 verfahren, jedoch wurde die Zugabe der 25%igen Natronlauge auf 16 g reduziert. Die Dispersion wies einen pH-Wert von 10,6 auf. Es erfolgte eine 30 minütige Nachhärtung bei 80 °C und pH 10,6. Nach dieser Härtephase von insgesamt 120 Minuten wurde die Dispersion auf Raumtemperatur abgekühlt. Der gemessene pH-Wert betrug 9,7.

Die Analyse des freien Formaldehydgehalts im Kaltwasserauszug ergab einen Wert von 40 ppm und die des freien Formaldehydgehaltes in der Dispersion ergab einen Wert von 0,02 %.

## Patentansprüche

1. Verfahren zur Herstellung von Mikrokapseldispersionen durch Kondensation eines teilmethylierten Melamin-Formaldehyd-Harzes mit einem Molverhältnis von Melamin : Formaldehyd: Methanol von 1 : 3,0 : 2,0 bis 1 : 6,0 : 4,0 in Wasser, in dem das im Wesentlichen wasserunlösliche, den Kapselkern bildende Material dispergiert ist, in Gegenwart eines Schutzkolloids bei pH Werten von 3 bis 6,5 durch Präformierung der Mikrokapseln bei einer Temperatur von 20 bis 50 °C und anschliessender Härtung der Kapselwand bei > 50 bis 100 °C, indem man während und/oder nach der Härtung wenigstens ein Calciumsalz zusetzt.

2. Verfahren nach Anspruch 1, wobei als Calciumsalz Calciumhydroxid eingesetzt wird.

3. Verfahren nach Anspruch 1 oder 2, wobei 0,5 bis 15 Gew.-% Calciumsalz bezogen auf das Melamin-Formaldehyd-Harz eingesetzt werden.

4. Verfahren nach einem der Ansprüche 1 bis 3, indem man nach Erreichen der Härtungstemperatur einen Zulauf einer Calciumsalz-Aufschlämmung oder - Lösung mit zeitlich im wesentlichen konstantem Massenfluss startet.

5. Verfahren nach einem der Ansprüche 1 bis 4, indem man während der Härtung ein Gemisch von Calciumsalz und Melamin mit einem Calciumsalz/Melamingewichtsverhältnis 20 : 1 bis 1 : 20 zusetzt.

6. Verfahren nach einem der Ansprüche 1 bis 5, indem man bei einer Temperatur von > 50 bis 100 °C wenigstens ein Calciumsalz zusetzt und anschließend mit einer wässrigen Base neutralisiert oder basisch stellt.

7. Mikrokapseldispersionen, erhältlich nach dem Verfahren nach einem der Ansprüche 1 bis 6.

8. Verwendung der Mikrokapseldispersionen nach Anspruch 7 zur Herstellung von Druckfarben oder Papierbeschichtungsmassen.

## Claims

1. A process for the preparation of microcapsule dispersions by condensation of a partly methylated melamine-formaldehyde resin having a molar ratio of melamine:formaldehyde:methanol of 1:3.0:2.0 to 1:6.0:4.0 in water in which the substantially water-insoluble material forming the capsule core is dispersed, in the presence of a protective colloid at a pH of from 3 to 6.5, by pre-forming the microcapsules at a temperature of from 20 to 50°C and then curing the capsule wall at from > 50 to 100°C, in which at least one calcium salt is added during and/or after the curing.

2. The process according to claim 1, the calcium salt used being calcium hydroxide.

3. The process according to claim 1 or 2, from 0.5 to 15% by weight, based on the melamine-formaldehyde resin, of calcium salt being used.

4. The process according to any of claims 1 to 3, in which, after the curing temperature has been reached, a feed of a calcium salt slurry or solution having substantially constant mass flow as a function of time is started.

5. The process according to any of claims 1 to 4, in which a mixture of calcium salt and melamine having a calcium salt/melamine weight ratio of from 20:1 to 1:20 is added during the curing.

6. The process according to any of claims 1 to 5, in which at least one calcium salt is added at a temperature of >50 to 100°C and is subsequently neutralized with an aqueous base or made alkaline.

7. A microcapsule dispersion obtainable by the process according to any of claims 1 to 6.

8. The use of the microcapsule dispersions according to claim 7 in the preparation of printing inks or paper coating materials.

## Revendications

1. Procédé de fabrication de dispersions de microcapsules par condensation d'une résine de mélamine-formaldéhyde partiellement méthylée ayant un rapport molaire mélamine:formaldéhyde:méthanol de 1:3,0:2,0 à 1:6,0:4,0 dans de l'eau, dans laquelle le matériau essentiellement insoluble dans l'eau formant le noyau des capsules est dispersé, en présence d'un colloïde protecteur à des pH de 3 à 6,5, par préformation des microcapsules à une température de 20 à 50 °C, puis durcissement de la paroi des capsules à > 50 à 100 °C, selon lequel au moins un sel de calcium est ajouté pendant et/ou après le durcissement.

2. Procédé selon la revendication 1, dans lequel de l'hydroxyde de calcium est utilisé en tant que sel de calcium.

3. Procédé selon la revendication 1 ou 2, dans lequel 0,5 à 15 % en poids de sel de calcium est utilisé, par rapport à la résine de mélamine-formaldéhyde.

4. Procédé selon l'une quelconque des revendications 1 à 3, dans lequel une alimentation d'une dispersion ou solution de sel de calcium ayant un débit massique essentiellement constant dans le temps est démarrée une fois la température de durcissement atteinte.

5. Procédé selon l'une quelconque des revendications 1 à 4, dans lequel un mélange de sel de calcium et de mélamine ayant un rapport en poids sel de calcium/mélamine de 20:1 à 1:20 est ajouté pendant le durcissement.

6. Procédé selon l'une quelconque des revendications 1 à 5, dans lequel au moins un sel de calcium est ajouté à une température de > 50 à 100 °C, puis le mélange est neutralisé ou rendu basique avec une base aqueuse.

7. Dispersions de microcapsules, pouvant être obtenues par le procédé selon l'une quelconque des revendications 1 à 6.

8. Utilisation des dispersions de microcapsules selon la revendication 7 pour la fabrication d'encres d'impression ou de matériaux de revêtement de papier.
